# EUROPEAN PATENT SPECIFICATION

(11) **EP 3 204 185 B1**
(45) Date of publication and mention of the grant of the patent: **02.10.2019**
(21) Application number: 15777665.9
(22) Date of filing: 06.10.2015
(51) Int. Cl.: C22C 38/34, F28F 21/08, B23K 101/04, B23K 35/02, C22C 38/54, C22C 38/58, C22C 38/44, B23K 35/30

(54) **A BRAZING MATERIAL FOR BRAZING ARTICLES OF AUSTENITIC STAINLESS STEEL AND METHOD THEREFORE**
LÖTMATERIAL ZUM LÖTEN VON ARTIKELN AUS AUSTENITISCHEM NICHTROSTENDEM STAHL UND VERFAHREN DAFÜR
MATÉRIAU DE BRASAGE POUR LE BRASAGE D'ARTICLES EN ACIER INOXYDABLE AUSTÉNITIQUE ET PROCÉDÉ ASSOCIÉ

(30) Priority: 08.10.2014 SE 1451185
(43) Date of publication of application: 16.08.2017
(73) Proprietor: SWEP International AB, 261 22 Landskrona (SE)
(72) Inventor: BORNEGÅRD, Niclas, S-237 36 Bjärred (SE)
(74) Representative: Ström & Gulliksson AB
(86) International application number: PCT/EP2015/072972
(87) International publication number: WO 2016/055430

(56) References cited:
- WO-A1-02/38327
- WO-A1-02/098600
- WO-A1-2009/116931
- WO-A1-2011/033056
- WO-A2-2008/060226
- US-A- 3 561 953
- US-A- 4 410 604
- US-A1- 2011 226 459

## Description

### FIELD OF THE INVENTION

The present invention relates to a brazing material comprising:
Silicon (Si);
Manganese (Mn);
Boron (B) and
Iron (Fe).

Moreover, the invention relates to a use of a brazing material according to the above for brazing together article of stainless steel.

Finally, the invention relates to a heat exchanger made from plates from austenitic stainless steel being brazed with a brazing material according to the invention.

### PRIOR ART

Brazing is a commonly used and well-known method for joining articles by melting a metal or alloy having a lower melting point than the material of the articles to be joined. Common examples of brazing are joining copper articles by a copper-phosphorous brazing material and articles of stainless steel by a copper brazing material. Important features of the brazing material are that the brazing material has a lower melting point than the material to be joined, that the wetting between the molten brazing material and the material to be brazed is good, that the brittle phases are kept at a minimum, that it does not entrain too much into the base material and weaken it or make its melting point decrease such that the base material melts during the brazing cycle or make important elements of the brazing material migrate from the base material to the brazing material, hence altering the properties of the base material. For example, if Nickel (Ni) would migrate from the base material to the brazing material, there is a risk that the base material would not be austenitic after the brazing.

Moreover, the cost of the brazing material is an issue - it is not unusual to use Silver (Ag) as a brazing material, at least in part, and, having general knowledge of the Silver (Ag) price, it is not difficult to comprehend that omission of Silver (Ag) will make a large difference on the prize of the brazing material. Another common brazing material is Nickel and Nickel based alloys, which also are a relatively costly.

Brazed heat exchangers have been used for a long time; usually, such heat exchangers comprise a number of heat exchanger plates provided with a pressed pattern of ridges and grooves adapted to keep the plates on a distance form one another under formation of interplate flow channels for media to exchange heat. The plates will contact one another in crossing points between the ridges and grooves of neighboring plates, and in order to keep the plates together, the plates are brazed to one another in these crossing points.

A common material of the heat exchanger plates is austenitic stainless steel, e.g. 316 or 304 stainless steel, and a common brazing material is copper. The heat exchanger plates are usually brazed in a furnace under vacuum or a controlled atmosphere. Copper brazing of stainless steel plates is a very efficient and reliable method for joining the heat exchanger plates, but in some applications, the copper brazings are not sufficient. For example, copper is sensitive to some chemicals (e.g. ammonia) and if tap water is heated by the heat exchanger, copper ions may be dissolved into the tap water, especially if the water to be heated contains salts.

During the last decade or so, some manufacturers of brazed plate heat exchangers have developed Iron (Fe) based brazing materials for joining the heat exchanger plates. However, until now, these Iron (Fe) based brazed plate heat exchangers have suffered from a number of problems, e.g. weak brazing joints, "burn through" of the base material due to erosion of base material or elements thereof by diffusion of melting point depressant from the brazing material into the base material. Such migration, or diffusion, of melting point depressant into the base material will lower its melting point, and may hence partly dissolve the base material and cause burn-through of e.g. a heat exchanger plate.

In the art, the problem of "burn through" has been addressed by trying to lower the melting point, whereby lower brazing temperatures may be used, resulting in less "burn through". However, "burn through" still remains a problem. A brazing material, less prone to causing "burn through" , while still having adequate melting point, would thus be desirable.

One example of an Iron (Fe) based brazing material according to the prior art is disclosed in EP 1 347 859. Tests of the disclosed brazing materials of EP 1 347 859, which brazing materials contain high amounts of Silicon (Si) (at least 10% for brazing materials that melted at a temperature of 1190 degrees centigrade), have shown severe problems with formation of brittle nickel silicides and erosion of the base material due to dissolution of melting point depressant, i.e. Silicon (Si) into the base material and hence melting of the base material.

Another example of an Iron (Fe) based brazing material is found in US-4 410 604 - in this document, a brazing material mimicking the base material to be brazed, but with addition of Silicon (Si) and Boron (B) in the amount of between 1.91 to 4% for depressing the liquidus temperature of the brazing material is disclosed.

US2011/0226459 relates to an iron-based brazing material comprising a brazing alloy which comprises Si, B and P for lowering the liquidus temperature of the brazing material.

It is the object of this invention to provide an Iron (Fe) based brazing material solving or at least mitigating the above problems of the known brazing material.

It is also the object of the invention to solve or at least mitigating the above problems by providing a method for brazing with the brazing material according to the invention.

### SUMMARY OF THE INVENTION

The present invention solves or at least mitigates the above and other problems by a brazing material comprising:
1.6-2.6% Molybdenum (Mo);
12.5-14.5% Nickel (Ni);
18.0-20.0% Chromium (Cr);
6.8-8.2% Silicon (Si);
4.0-5.8%Mn;
0.6 -1.2% Boron (B);
Balance being Iron (Fe) and small amounts of other elements (impurities), wherein the percentages of these elements are lower than 0.1% for each element, all percentages being given by weight.

In order to attain a good corrosion resistance while keeping the cost of the brazing material at an acceptable level, the content of Molybdenum (Mo) may be 1.9-2.2%.

In order to keep the cost of the brazing material acceptable and simultaneously mimic the composition of the material to be brazed, the percentage of Nickel (Ni) may be 13.1-13,3 %.

For guaranteeing corrosion resistance, while keeping the cost and the melting point of the brazing material within acceptable boundaries, the percentage of Chromium (Cr) may be 18.0-18.2 %. This percentage also mimics the Chromium (Cr) content of the base material to be brazed.

In order to reduce the melting point of the brazing material, while maintaining acceptable levels of formation of Silicides, e.g. Nickel Silicides, the percentage of Silicon (Si) may be 7.5-8.2 %.

In some embodiments of the invention, the percentage of Silicon (Si) may be 7.8-8.0%.

In order to reduce the erosive properties of the brazing material on the base material and to contribute as an austenite stabilizer, the percentage of Manganese (Mn) may be 4.0-5.5%.

The erosion may be even more reduced if the percentage of Manganese (Mn) is 5.0-5.5% or 5.1-5.3%.

In order to reduce the melting point of the brazing material, while keeping the formation of chromium borides at acceptable levels, the percentage of Boron (B) may 0.9-1.2%. In order to further reduce the formation of chromium borides, the percentage of Boron (B) may be 1.0-1.1%.

The brazing material may be used for brazing together article of austenitic stainless steel, especially of the type 304 or 316.

One example of articles suitable to be brazed is heat exchanger plates.

### BRIEF DESCRIPTION OF THE DRAWINGS

In the following, the invention will be described by reference to preferred embodiments of the invention, in conjunction with the accompanying drawings, wherein:
Fig. 1a is a graph showing DTA-TGA curves for several different brazing materials according to the present invention;
Fig. 1b is a graph showing a DTA-TGA diagram for one brazing material having a composition according to the present invention;
Fig. 2 is three graphs showing the main effects for erosion as a function of percentage of Silicon, Manganese and Boron; and
Fig. 3 is a scatterplot showing erosion vs. brazing temperature minus liquidus temperature, i.e. superheat, for different brazing materials.

### DESCRIPTION OF EMBODIMENTS

The brazing material according to the invention contains:
1.6-2.6% Molybdenum (Mo);
12.5-14.5% Nickel (Ni);
18-20% Chromium (Cr);
6.8-8.2% Silicon (Si);
3.0-6.4%Manganese (Mn);
0.6-1.2% Boron (B);

Balance being Iron (Fe) and small amounts of other elements, wherein the percentages of these elements are lower than 0.1% for each element, all percentages being given by weight.

Below, some reasoning concerning the constituents of the brazing materials according to the invention will be given. It should be noted that the brazing material constituents all cooperate to give the desired properties. It is hence not possible to amend the percentage of one constituent and foresee the effect on the brazing material as a whole, concerning e.g. melting point, corrosion resistance, erosion and strength.

Concerning the balance, i.e. Iron (Fe), Iron is used for two reasons: the first reason is that it is a low cost metal and the second reason is that it will make a brazing material mimicking the base material to be brazed (in this case 316 or 304 stainless steel);
Nickel (Ni) will give the brazing material its austenitic properties. If less Nickel than defined above is used, the risk of excessive formation of ferritic phases in the brazing joint is increased. Also, there will be a risk that Nickel in the base material will migrate to the brazing joint during the brazing process, hence increasing the risk of formation of ferritic phases in the base material. If more Nickel than defined above is used, the cost of the brazing material will increase.

The Chromium (Cr) content will give the brazing joint its corrosion resistance - smaller amounts than defined above will give less corrosion resistance, while larger amounts will increase the cost of the brazing material and influence the melting temperature of the brazing material in a non-desired manner. Increased amounts of Chromium will, however, increase the melting temperature. Chromium also works as a ferrite stabilizer - by adding an amount of Chromium to the brazing material that about equals the amount of Chromium in the material to be brazed, the base material composition is mimicked.

Molybdenum (Mo) will also increase the corrosion resistance of the brazing material. If less Molybdenum than defined above is used, the corrosion resistance will decrease. Molybdenum is an expensive metal - hence, the cost of the brazing material will increase if more Molybdenum is used. Moreover, Molybdenum is a ferrite stabilizer, and the used level is tailored to mimic the austenitic base material to be brazed.

Manganese (Mn) is a constituent that reduces the erosion of the base material, i.e. the material being joined by brazing. The Manganese will evaporate during the brazing process, at least to some extent, and excessive amounts of manganese is added to the brazing material, the evaporated Manganese will foul the interior of the brazing furnaces in which the brazing is performed. However, in the percentages given above, the Manganese will reduce erosion significantly, without causing too much fouling of the furnace interior or the vacuum pumps used to pump out gas from the furnace in case it is desired to use vacuum during the brazing. Moreover, Manganese is an austenite stabilizer, and will to some extent counteract the melt depressant Silicon, which is a ferrite stabilizer. In the prior art, the austenite stabilizing properties seem to be neglected, just like its erosion reducing properties. Also, the interaction between the Silicon and the Manganese properties when it comes to ferrite/austenite formation are not mentioned in conjunction with brazing material.

Silicon (Si) is added for reduction of the melting temperature. It also increases the wettability of the brazing material to the base material. If less Silicon than defined is used, the melting point of the brazing material is not decreased sufficiently, while more Silicon than defined above will give a weaker brazing joint, due to formation of brittle Silicide phases. Moreover, the erosion of the base material increases with large amounts of Silicon.

Boron (B) is also added for depressing the melting point. However, it has turned out that the Boron may react with the other constituents of the brazing material and the base material to form borides, primarily chromium borides, which are very brittle and hence decreases the strength of the brazing joints. Increased amounts of Boron will worsen the corrosion properties. However, in the amounts defined above, the boride formation and corrosion resistance have turned out to be within acceptable limits.

One desired feature of the brazing material is that the liquidus temperature should be below 1170 degrees C. A liquidus temperature of 1190 degrees C may, however, be acceptable in some cases. According to an embodiment, the brazing material has a liquidus temperature of less than 1170 degrees C, e.g. 1160 degrees C.

It is also important the erosion properties, i.e. that the brazing material entrains the base material and lowers its melting temperature, such that the base material melts, are acceptable.

In order to attain a suitable brazing material, a test has been carried out on the following brazing material compositions:

**Table 1; the percentages of the respective element are given as weight percent.**

| **Alloy_Lot_No** | **C** | **S** | **Mo** | **Ni** | **Cr** | **Si** | **Mn** | **Fe** | **B** | **T_sol** | **T_liq** |
|---|---|---|---|---|---|---|---|---|---|---|---|
| G118 | 0,04 | 0,009 | 2,04 | 13,3 | 18,1 | 7,9 | 5,1 | Bal. | 1,08 | 1115 | 1160 |
| G227 | 0,043 | 0,005 | 2,04 | 13,4 | 18,9 | 8,1 | 5,3 | Bal. | 1,04 | 1110 | 1163 |
| G228 | 0,057 | 0,004 | 2,18 | 13,5 | 18,6 | 7,8 | 5,5 | Bal. | 2,05 | 1088 | 1145 |
| G35 | 0,029 | 0,003 | 2,1 | 12,8 | 17 | 12,4 | 0 | Bal. | 1,9 | 1127 | 1200 |
| G68 | 0,07 | 0,004 | 2,16 | 12,8 | 16,8 | 11,6 | 0 | Bal. | 2,02 | 1130 | 1195 |
| G69 | 0,041 | 0,003 | 1,87 | 12,8 | 17,5 | 10,7 | 0 | Bal. | 1,92 | 1133 | 1172 |
| G7 | 0,017 | 0,003 | 1,87 | 13,1 | 17,4 | 12,7 | 0 | Bal. | 2,1 | 1131 | 1201 |
| G71 | 0,047 | 0,005 | 2,04 | 13,4 | 17 | 8,16 | 3,16 | Bal. | 2 | 1093 | 1165 |
| G72 | 0,073 | 0,009 | 1,99 | 13,4 | 17,2 | 10,7 | 2,97 | Bal. | 1,99 | 1107 | 1170 |
| G74 | 0,03 | 0,005 | 2,14 | 13,7 | 17,3 | 7 | 5,2 | Bal. | 2,03 | 1092 | 1170 |

In table 1, Examples G228 - G74 are comparative examples.

For these materials, DTA-TGA measurements, tensile strength tests, erosion tests and corrosion tests have been performed.

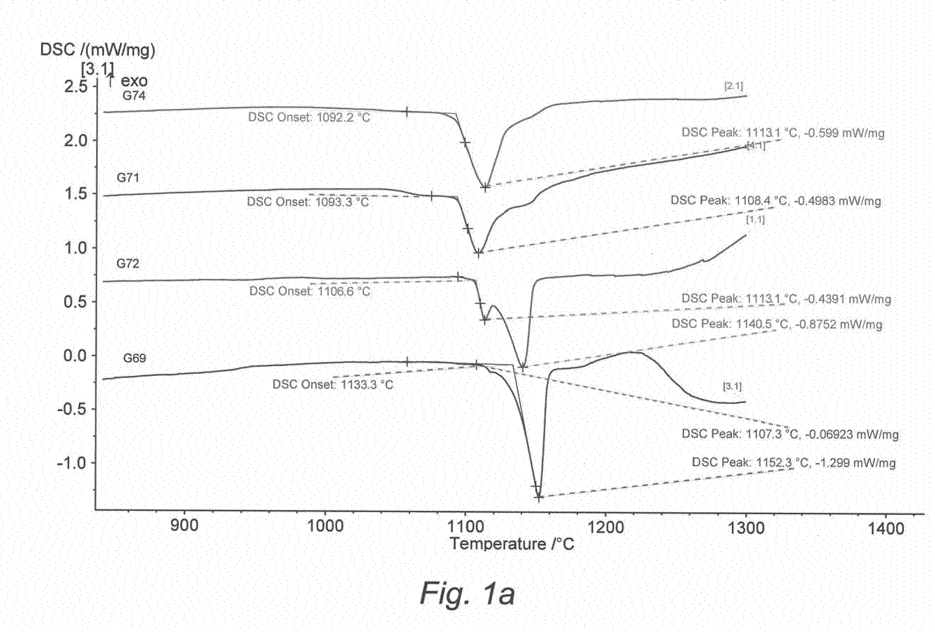

In Fig. 1a, DTA-TGA measurements for the brazing alloys G74, G71, G72 and G69 are shown. As can be noted, the melting temperatures for these materials ranges from 1092 degrees C (for G74) to 1133 degrees C (for G69) it can further be noted that there is a distinct DSC peak at 1092 degrees C for the G72 brazing material, indicating that one component of the brazing material will start to melt that the rest of the brazing material.

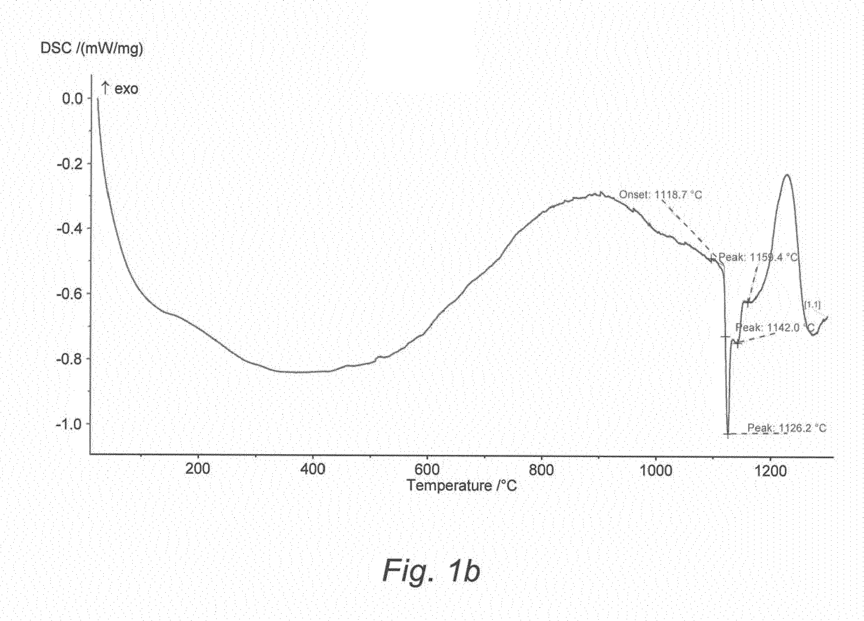

In Fig. 1b, DTA-TGA measurements for the brazing alloy G118 is shown. As can be noted, this material is completely melted at 1160 degrees C, and there is also a slight peak at 1115 degrees C, indicating that some of the material melts at this temperature.

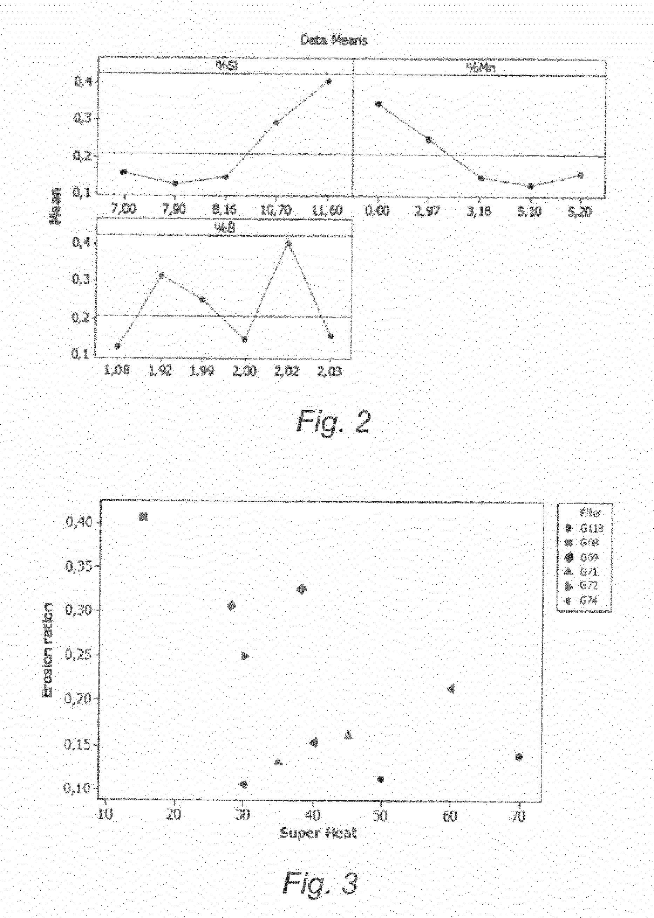

Surprisingly, it has been found that the erosion, i.e. the phenomenon that the brazing material, or at least the melting point depressants thereof, has a minimum (it is desired with an as low erosion as possible) for 3-5.5% Manganese. Moreover, it has been found that Silicon in amounts of more than 9% rapidly increases erosion. In Fig. 2, Plots of erosion as a function of Silicon, Manganese and Boron percentages are shown. As can be seen, the erosion increases rapidly above 8-9% Silicon, while Manganese percentages above 3% decrease the erosion. When it comes to the content of Boron, the results are indecisive.

In Fig. 3, a scatterplot showing erosion ratio on the X-axis and the difference between brazing temperature and melting temperature is shown. As can be seen in this plot, the brazing alloys G71 and G74 stand out when it comes to low erosion. Although G72 has similar Mn content as G71, the higher Si content in G72 seems to increase the erosion rate. The erosion ratio is defined as (h₀-h₁)/h₀, wherein h₀ is the material thickness before brazing and h₁ is the undissolved material thickness after brazing.

Another effect of addition of Manganese is that the solidus and liquidus temperatures of the brazing material after the brazing cycle will be higher than the solidus and liquidus temperatures under a brazing cycle. This is due to the Manganese, which has liquidus lowering properties, vaporizing during the brazing operation, meaning that if the brazed article is reheated after the brazing, it must be heated to a higher temperature before the brazing joints melt. The vaporized Manganese will not entrain into the base material; rather, it will leave the furnace in which the brazing is performed through the vacuum pumps usually deployed to evacuate the furnace. The Boron, which as mentioned also has some liquidus lowering properities, will also to some extent leave the brazing material, since it will migrate into the base material during the brazing cycle, hence increasing the solidus and liquidus temperatures of the brazing material.

In order to manufacture a brazing material according to the invention, it is preferred to blend alloys containing some or all of the desired metals of the brazing material according to the invention, and/or elemental metal, and melt the blend to form a uniform alloy containing all the desired elements in the desired percentages. It should be noted that vaporizing of the Manganese during the blending and consecutive melting of the brazing material can be avoided if the melting is performed in a protective atmosphere rather than under vacuum. Once melted and blended, the alloy is poured into one or several molds and allowed to solidify to form ingots of brazing alloy. It should be noted that in some cases, it might be suitable to use rather small molds for obtaining small ingots, since there might be a small risk that the elements of the brazing alloy might separate during the solidification in the mold.

After the ingots have solidified, they are crushed. In order to even out possible differences between the compositions of the ingots, a batch of powder may be mixed. The powder is then mixed with a binder to form a paste.

More common methods of forming a powder are, however, water or gas atomization.

In another embodiment of the invention, the brazing material is made in form of ribbons or foils, e.g. by melt spinning.

Corrosion tests were performed by subjecting braze joints to salt spray for up to four weeks. It was found that the G118 braze material exhibited the best corrosion results. Generally, an overall increased amount of melt depressants, e.g. Si, B, seems to increase the corrosion. However, the high percentage of Boron in the G74 increases the risk of formation of chromium borides, which may lead to brittle phases in and around the brazing joint.

The excellent properties of the G118 braze material come at a price - the melting temperature of this brazing material is considerably higher than for prior art brazing materials. Historically, it has been desired to use Iron based brazing materials having a considerably lower melting temperature than the base material to be brazed. The brazing temperature has been kept slightly above the melting temperature of the brazing material. The prime reason for this approach has been to reduce erosion of the base material, which, as mentioned above, results due to melting point depressant migrating into the base material such that its melting temperature decreases.

However, surprisingly it has been found that by using the brazing material of the invention and high brazing temperatures, i.e. above 1200 degrees C, preferably above 1230 degrees C, brazing joints exhibiting high strength, limited corrosion due to entrainment of melting point depressant into base material and excellent corrosion resistance at a reasonable price have been achieved.

### Brazing process

In order to get an as strong brazing joint as possible, it is important to control both the application of the brazing material to the items to be brazed and the process where the articles are brazed. A suitable brazing process for brazing articles of austenitic stainless steels with the brazing material according to the invention may e.g. comprise:
Placing brazing material on or in close vicinity of portions to be brazed to one another;
Placing the articles in a furnace;
Heating the furnace to a temperature such that the binder is vaporized and hold the temperature a time sufficient for the binder to be vaporised, hence leaving the powdered brazing material on the articles to be brazed;
Heating the furnace to a temperature slightly below the melting temperature of the brazing material;
Holding the furnace on the temperature slightly below the melting temperature for a time period sufficient to equalize the temperature in the furnace and the load, i.e. the articles to be brazed;
Heating the temperature in the furnace to a temperature sufficient to melt the brazing material but insufficient to melt the material from which the articles to be brazed are manufactured;
Cooling the furnace such that the brazing material solidifies and the brazed articles may be removed from the furnace.

Very promising results have been achieved by placing the brazing material around, not at, the joint to be brazed. This brazing method has been thoroughly disclosed in Swedish patent application 1351284-3, filed by SWEP International on October 29, 2013, and has proven to give excellent brazing results when combined with the brazing material according to the invention.

One reason for the excellent result of the combination between the brazing method of Swedish patent application 1351284-3 and the brazing material according to the present invention may be the high temperature - by placing the brazing material such that no brazing material is located between the surfaces to be brazed to one another, the diffusion bonding between the surfaces to be brazed increases (due to the parts coming in close contact with one another), and diffusion brazing increases with increasing temperature.

Concerning the strength of the brazing joint, it is often found that the brazing joint has a strength exceeding the theoretical strength of the brazing material. Tests have shown that this might be due to the diffusion or trans liquid phase bonding process - if the items to be joined are located very close to one another during the brazing process, the base material of the items to be joined will start to migrate into one another, such that a metallic bond is formed without or with minimal melting of the base material. This also reduces the amount of brittle phases (e.g. nickel silicides and chromium borides) in the joint.

The bonding process becomes more rapid the higher the temperature is - this is probably one of the reasons for the strong brazing joints achieved by using the brazing material according to the present invention, which demands for a high brazing temperature due to the comparatively high melting point of the brazing material and allows for a high brazing temperature with low erosion of the base material due to the low erosion properties of the brazing material.

## Claims

1. A brazing material, comprising:
1.6 to 2.6% Molybdenum (Mo);
12.5 to 14.5% Nickel (Ni);
18.0 to 20.0% Chromium (Cr);
6.8 to 8.2% Silicon (Si);
4.0 to 5.8% Manganese (Mn);
0.6 to 1.2% Boron (B);
balance being Iron (Fe) and inevitable impurities, all percentages being given by weight.

2. The brazing material of claim 1, wherein the percentage of Molybdenum (Mo) is 1.9-2.2 %.

3. The brazing material of any of the preceding claims, wherein the percentage of Nickel (Ni) is 13.2-13.7 %.

4. The brazing material of any of the preceding claims, wherein the percentage of Chromium (Cr) is 18.0-19.0 %.

5. The brazing material of any of the preceding claims, wherein the percentage of Silicon (Si) is 7.3-8.2 %.

6. The brazing material of any of the preceding claims, wherein the percentage of Silicon (Si) is 7.8-8.2%.

7. The brazing material of any of the preceding claims, wherein the percentage of Manganese (Mn) is 4.5-5.5%.

8. The brazing material of any of the preceding claims, wherein the percentage of Manganese (Mn) is 5.1-5.5%.

9. The brazing material of any of the preceding claims, wherein the percentage of Manganese (Mn) is 5.2-5.4%.

10. The brazing material of any of the preceding claims, wherein the percentage of Boron (B) is 0.8-1.2%.

11. The brazing material of any of the preceding claims, wherein the percentage of Boron (B) is 1.0-1.1%.

12. Use of a brazing material according to any of the preceding claims for brazing together articles of stainless steel.

13. The use according to claim 12, wherein the stainless steel is an austenitic stainless steel of type 304 or 316.

14. Use according to any of the claims 12 or 13, wherein the stainless steel articles to be brazed are heat exchanger plates.

15. A heat exchanger made from plates from stainless steel according to any of the claims 13 or 14 and being brazed with a brazing material according to any of the claims 1-11.

## Patentansprüche

1. Lötmaterial, umfassend:
1,6 bis 2,6 % Molybdän (Mo);
12,5 bis 14,5 % Nickel (Ni);
18,0 bis 20,0 % Chrom (Cr);
6,8 bis 8,2 % Silizium (Si);
4,0 bis 5,8 % Mangan (Mn);
0,6 bis 1,2 % Bor (B);
wobei der Rest Eisen (Fe) und unvermeidliche Verunreinigungen sind, wobei alle Prozentanteile auf das Gewicht bezogen sind.

2. Lötmaterial nach Anspruch 1, wobei der Prozentanteil von Molybdän (Mo) 1,9 bis 2,2 % beträgt.

3. Lötmaterial nach einem der vorhergehenden Ansprüche, wobei der Prozentanteil von Nickel (Ni) 13,2 bis 13,7 % beträgt.

4. Lötmaterial nach einem der vorhergehenden Ansprüche, wobei der Prozentanteil von Chrom (Cr) 18,0 bis 19,0 % beträgt.

5. Lötmaterial nach einem der vorhergehenden Ansprüche, wobei der Prozentanteil von Silizium (Si) 7,3 bis 8,2 % beträgt.

6. Lötmaterial nach einem der vorhergehenden Ansprüche, wobei der Prozentanteil von Silizium (Si) 7,8 bis 8,2 % beträgt.

7. Lötmaterial nach einem der vorhergehenden Ansprüche, wobei der Prozentanteil von Mangan (Mn) 4,5 bis 5,5 % beträgt.

8. Lötmaterial nach einem der vorhergehenden Ansprüche, wobei der Prozentanteil von Mangan (Mn) 5,1 bis 5,5 % beträgt.

9. Lötmaterial nach einem der vorhergehenden Ansprüche, wobei der Prozentanteil von Mangan (Mn) 5,2 bis 5,4 % beträgt.

10. Lötmaterial nach einem der vorhergehenden Ansprüche, wobei der Prozentanteil von Bor (B) 0,8 bis 1,2 % beträgt.

11. Lötmaterial nach einem der vorhergehenden Ansprüche, wobei der Prozentanteil von Bor (B) 1,0 bis 1,1 % beträgt.

12. Verwendung eines Lötmaterials nach einem der vorhergehenden Ansprüche zum Zusammenlöten von Gegenständen aus rostfreiem Stahl.

13. Verwendung nach Anspruch 12, wobei der rostfreie Stahl ein austenitischer rostfreier Stahl vom Typ 304 oder 316 ist.

14. Verwendung nach einem der Ansprüche 12 oder 13, wobei die zu lötenden Gegenstände aus rostfreiem Stahl Wärmetauscherplatten sind.

15. Wärmetauscher, welcher aus rostfreien Stahlplatten nach einem der Ansprüche 13 oder 14 hergestellt ist und mit einem Lötmaterial nach einem der Ansprüche 1 bis 11 gelötet ist.

## Revendications

1. Matériau de brasage comprenant :
1,6 à 2,6 % de molybdène (Mo) ;
12,5 à 14,5 % de nickel (Ni) ;
18,0 à 20,0 % de chrome (Cr) ;
6,8 à 8,2 % de silicium (Si) ;
4,0 à 5,8 % de manganèse (Mn) ;
0,6 à 1,2 % de bore (B) ;
le reste étant du fer (Fe) et des impuretés inévitables, tous les pourcentages étant indiqués en poids.

2. Matériau de brasage selon la revendication 1, dans lequel le pourcentage de molybdène (Mo) est de 1,9 à 2,2 %.

3. Matériau de brasage selon l'une quelconque des revendications précédentes, dans lequel le pourcentage de nickel (Ni) est de 13,2 à 13,7 %.

4. Matériau de brasage selon l'une quelconque des revendications précédentes, dans lequel le pourcentage de chrome (Cr) est de 18,0 à 19,0 %.

5. Matériau de brasage selon l'une quelconque des revendications précédentes, dans lequel le pourcentage de silicium (Si) est de 7,3 à 8,2 %.

6. Matériau de brasage selon l'une quelconque des revendications précédentes, dans lequel le pourcentage de silicium (Si) est de 7,8 à 8,2 %.

7. Matériau de brasage selon l'une quelconque des revendications précédentes, dans lequel le pourcentage de manganèse (Mn) est de 4,5 à 5,5 %.

8. Matériau de brasage selon l'une quelconque des revendications précédentes, dans lequel le pourcentage de manganèse (Mn) est de 5,1 à 5,5 %.

9. Matériau de brasage selon l'une quelconque des revendications précédentes, dans lequel le pourcentage de manganèse (Mn) est de 5,2 à 5,4 %.

10. Matériau de brasage selon l'une quelconque des revendications précédentes, dans lequel le pourcentage de bore (B) est de 0,8 à 1,2 %.

11. Matériau de brasage selon l'une quelconque des revendications précédentes, dans lequel le pourcentage de bore (B) est de 1,0 à 1,1 %.

12. Utilisation d'un matériau de brasage selon l'une quelconque des revendications précédentes pour braser ensemble des articles en acier inoxydable.

13. Utilisation selon la revendication 12, dans laquelle l'acier inoxydable est un acier inoxydable austénitique de type 304 ou 316.

14. Utilisation selon l'une quelconque des revendications 12 et 13, dans laquelle les articles en acier inoxydable devant être brasés sont des plaques d'échangeur de chaleur.

15. Echangeur de chaleur fait à partir de plaques en acier inoxydable selon l'une quelconque des revendications 13 et 14 et brasées avec un matériau de brasage selon l'une quelconque des revendications 1 à 11.
